(19) Europäisches Patentamt
European Patent Office
Office européen des brevets

(11) **EP 3 732 037 B1**

(12) **EUROPEAN PATENT SPECIFICATION**

(45) Date of publication and mention of the grant of the patent:
**07.08.2024   Bulletin 2024/32**

(21) Application number: **18837046.4**

(22) Date of filing: **21.12.2018**

(51) International Patent Classification (IPC):
**B32B 5/02** *(2006.01)*     **B32B 27/12** *(2006.01)*

(52) Cooperative Patent Classification (CPC):
**B32B 27/12; B32B 5/02; B32B 5/022;**
B32B 2260/021; B32B 2260/046; B32B 2262/02;
B32B 2262/106; B32B 2264/0207;
B32B 2264/0214; B32B 2264/0292;
B32B 2264/104; B32B 2307/3065; B32B 2307/718;
B32B 2307/726; B32B 2307/732;        (Cont.)

(86) International application number:
**PCT/US2018/067017**

(87) International publication number:
**WO 2019/133463 (04.07.2019 Gazette 2019/27)**

(54) **FIRE RETARDANT VEIL FOR USE IN COMPOSITE MATERIALS**

FLAMMHEMMENDER SCHLEIER ZUR VERWENDUNG IN VERBUNDWERKSTOFFEN

VOILE IGNIFUGE DESTINÉ À ÊTRE UTILISÉ DANS DES MATÉRIAUX COMPOSITES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **26.12.2017   US 201762610408 P**

(43) Date of publication of application:
**04.11.2020   Bulletin 2020/45**

(73) Proprietor: **Cytec Industries Inc.**
**Princeton, NJ 08540 (US)**

(72) Inventors:
• **LENZI, Fiorenzo**
**81041 Vitulazio (IT)**

• **RESTUCCIA, Carmelo Luca**
**Chester, CH1 4 HZ (GB)**

(74) Representative: **Kraus & Lederer PartGmbB**
**Thomas-Wimmer-Ring 15**
**80539 München (DE)**

(56) References cited:
**WO-A1-2017/083631     GB-A- 2 472 423**
**US-A1- 2010 136 316     US-A1- 2015 375 461**

(52) Cooperative Patent Classification (CPC): (Cont.)
B32B 2605/18

**Description**

The present disclosure generally relates to fiber-reinforced resin composite materials and manufacturing of thereof.

BRIEF DESCRIPTION OF THE DRAWINGS

**FIG. 1** is a schematic illustration of a fire retardant veil according to an embodiment of the present disclosure.

**FIG. 2** shows a top-view image of a fire retardant veil manufactured according to an example, optically magnified in optical microscope system.

DETAILED DESCRIPTION

The use of fibre-reinforced polymer composites in primary and secondary structures of aircraft is becoming more prevalent. The advantages of fibre-reinforced polymer composites include high strength-to-weight ratio, excellent fatigue endurance, corrosion resistance and flexibility, allowing for a significant reduction in component parts, and reducing the need for fasteners and joints.

Fire is a major safety hazard for commercial aircrafts. In-flight fire has been ranked as one of the highest known contributing causes of fatalities arising from accidents involving commercial jet aircrafts. All non-metallic materials used inside the pressure vessel of commercial aircrafts are subject to flammability regulations in many countries. In recent years, some aircraft parts such as fuselage and wings are manufactured from composite materials composed of reinforcement fibres embedded in a polymer matrix. The heat, smoke and gases released by a burning composite structure and the degradation of the structural integrity can quickly jeopardize the safety of an aircraft in case of a fire accident.

In many countries, regulations and requirements for testing aircraft interior parts and materials are established. For example, the Federal Aviation Administration (FAA) in the United States set out such requirements in FAR Section 25.853, which are applicable for composite parts, especially fuselage cabin of aircrafts. Similar requirements are set in Europe by the EUROPEAN AVIATION SAFETY AGENCY (EASA).

One standard requirement is that the composite material should be able to self-extinguish within 15 sec when it is subjected to a burning test, e.g., 60-sec Vertical Burning Test. The test procedure for measuring the self-extinguishing time of epoxy resins and composites are set forth in the FAA Aircraft Materials Fire Test Handbook (FAR 25.853 App.F Part-I (a)(1)(i)), which is recognized in the aerospace industry as a standard test method.

Another requirement is that the combustion of a material should not generate high levels of smoke and toxic gasses. The level of smoke and toxic gasses may be measured by means of a combustion test of composite coupons. One of the common tests for creating "smoke" is the ASTM E662 Smoke Chamber which includes exposing composite coupons to an external radiant heat flux of 25 kW/m$^2$ in a closed chamber. Another industry standard test is Boeing Specification Support Standard, BSS 7239 ("Test Method for Toxic Gas Generation by Materials of Combustion") which requires analysis of combustion gases and has specified concentration limits on toxic gases which currently include hydrogen cyanide (HCN), nitrogen oxides (NO$_X$), carbon monoxide (CO), hydrogen chloride (HCl), hydrogen fluoride (HF), and sulfur dioxide (SO$_2$). Another industry standard test is Airbus AITM 3.0005, which is similar to BSS 7239; it requires analysis of combustion gases and has specified concentration limits on the toxic gases as described above.

WO 2017/083631 A1 discloses a hybrid veil that is self-supporting, permeable to liquid and gas, and comprises intermingled, randomly arranged fibers in the form of a nonwoven structure, particles dispersed throughout the nonwoven structure, and a polymeric or resinous binder. US 2015/375461 A1 discloses a preform configured to receive liquid resin in a liquid molding process. Said preform comprises a nonwoven veil that may contain additional and/or toughening agents/particles. This document does, however, not mention any of the specific particles used in the present invention. US 2010/136316 A1 also does not disclose the nature of particles used in the present invention.

The present disclosure provides a solution whereby a composite material can simultaneously provide load bearing capabilities and improve fire retardancy properties, especially in terms of reduced levels of toxic gas emission and self-extinguishing capability. To that end, a fire retardant veil for use in composite materials is disclosed herein. The fire retardant veil can be placed at the interlaminar region between prepreg layers of a composite layup or between fibre layers of a preform to be infused with resin.

Fire Retardant Veil

The fire retardant veil is a low areal weight multifunctional veil, which is porous, flexible and self-supporting. It is a nonwoven structure composed of intermingled, randomly arranged fibres and fire retardant particles dispersed throughout the nonwoven structure. The majority of the particles are penetrating through the thickness of the nonwoven structure. In one embodiment, the particles are homogeneously dispersed throughout the nonwoven structure. The veil also contains a small amount of polymeric or resinous binder in sufficient amount to hold the fibres and particles together and to maintain the integrity of the veil. The binder is present throughout the veil. Aside from the small amount of binder, the veil is substantially free of resin. As such, the veil is self-supporting - meaning that it is a separate structure which does not require or attached to another supporting layer or carrier. The particles are comingled with the fibres and at least some of the particles are present in-between the fibres of the nonwoven structure. The particles are held in position throughout the nonwoven structure due to the combination of the binder and the mechanical interlocking mechanisms created by the intermingled fibres.

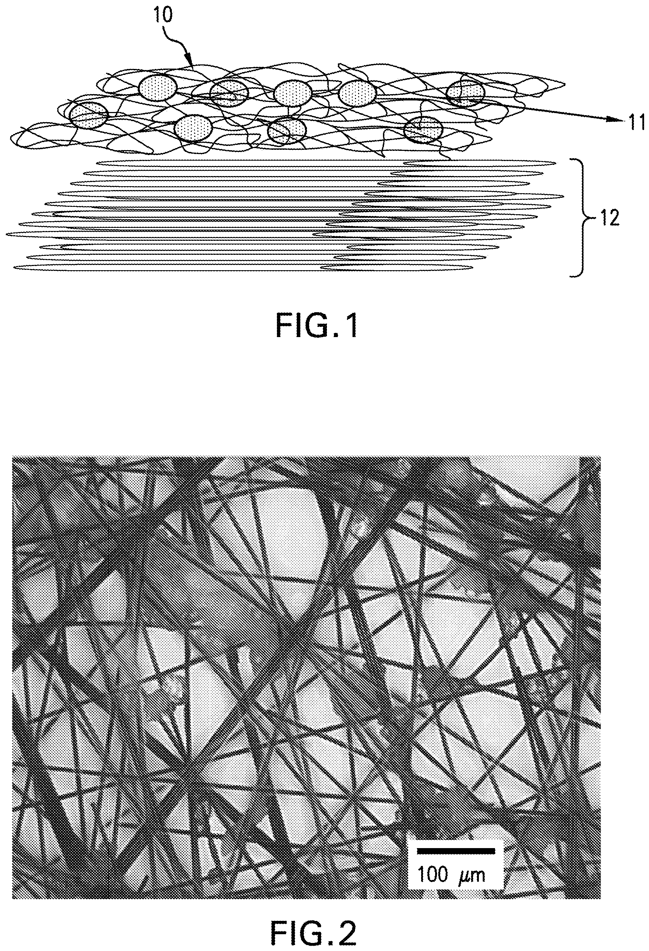

**FIG. 1** is a schematic illustration of a fire retardant nonwoven veil 10 having fire-retardant particles 11 dispersed throughout. The veil 10 can be placed adjacent to fibre layers 12 of a preform adapted for resin infusion.

The fire retardant veil has an areal weight of up to 30 gsm (grams per square meter), preferably up to 20 gsm. In some embodiments, the veil's areal weight is 5 gsm to 20 gsm. The weight ratio of fibres to fire retardant particles in the veil is 2:1 to 1:3.

The nonwoven fibres making up the nonwoven veil are carbon fibres. In one embodiment, the nonwoven veil is composed of uncoated carbon fibres.

Thermoplastic fibres for the veil include fibres made of polyamides such as aliphatic polyamides (PA), cycloaliphatic polyamides, aromatic polyamides, polyphthalamides (PPA), ether or ester block polyamides (PEBAX, PEBA), polyphenylenesulfides (PPS), polyetherimides (PEI), polyimides (PI), polyimides having phenyltrimethylindane structure, polyamidoamides (PAI), polysulfones, polyarylsulfones such as polyethersulfone (PES), polyethersulfone-etherethersulfone (PES:PEES), polyetherethersulfone (PEES), polyaryletherketone (PAEK) such as polyetherketone (PEK), polyetheretherketone (PEEK), polyurethanes, thermoplastic polyurethanes, polycarbonates, polyacetals, polyphenyleneoxides (PPO), polyesters, polyethers, polyethernitriles, polybenzimidazoles, thermoplastic elastomers, liquid crystal polymers (LCPs), combinations and copolymers thereof.

In some embodiments, the nonwoven fibres in the veil are chopped fibres having lengths in the range of 5 mm to 18 mm. The majority (>50%) of the nonwoven fibres have cross-sectional diameters in the range of about 3.0 $\mu$m to about 15 $\mu$m, and in some embodiments, $\leq$ 5.5 $\mu$m in diameter.

The fire retardant particles may be selected from various flame retardants particles and smoke suppressant particles to impart flame retardant properties. Preferably, the fire retardant particles are not soluble in thermoset resins such as epoxy at temperatures of up to 200°C.

The particles may have any suitable three-dimensional shapes such as spherical, flakes, ellipsoidal, rods, cylindrical, cuboid, polyhedral, etc.

In some embodiments, the fire retardant particles contain a fire retardant compound such as a phosphorous compound, preferably at a content of at least 14% by weight, or at least 18% by weight. In some embodiments, the fire retardant particles contain nitrogen and phosphorous compound. In other embodiments, the fire retardant particles contain nitrogen, phosphorous compound and melamine.

In some embodiments, the fire-retardant particles are nitrogen-phosphorous based particles, containing a phosphorous content of 15%-18% by weight and nitrogen content of 30%-34% by weight. Alternatively, they may have a phosphorous content of 17%-20% by weight and nitrogen content of 9%-12% by weight.

The fire retardant particles are selected from particles of: ammonium polyphosphate, polyphosphazene, melamine cyanurate, melamine phosphate, melamine polyphosphate, melamine poly(metal phosphates), metal oxides including aluminium hydroxide ($Al(OH)_3$), alumina trihydrate (ATH), zinc borate, and alkali metal silicates. Examples of melamine poly(metal phosphates) are melamine - poly (zinc phosphate) and melamine - poly (aluminium phosphate). A combination of different fire retardant particles may be selected.

In one embodiment, the fire retardant particles are thermally expandable or intumescent fire retardant particles that will expand when exposed to high temperature flame, for example, between 200°C and 600°C, and preferably, they have low solubility in water and other organic liquids.

According to one embodiment, the fire retardant particles are ammonium polyphosphate particles encapsulated within a melamine or melamine-containing resin. The melamine will expand when exposed to high temperature flame, for example above 200°C.

The fire retardant particles have a mean particle size (d50) from 5 to 35 microns ($\mu$m), and in some embodiments, 5 to 20 $\mu$m. Particle size is determined by a laser diffraction technique, for example, using Malvern Mastersizer 2000, which operates in the 0.002 nanometer to 2000 micron range. "d50" represents the median of the particle size distribution, or alternatively is the value on the distribution such that 50% of the particles have a particle size of this value or less. For spherical or almost spherical particles the mean particle size is approximately the diameter of the particle. For intumescent fire retardant particles, the particle size is referring to that of unexpanded particles. For non-spherical particles, such as rods and flakes, the particle size refers to the average of smallest and largest dimensions.

Examples of commercially available fire retardant particles are ammonium polyphosphate particles from CLARIANT under the product names Exolit® AP 422, Exolit® AP 462 and Exolit® AP 740 F, and melamine poly(metal phosphate) commercially available under the brand name Safire from Catena Additives. Exolit® AP 422 is a fine-particle white powder having a particle size (d50) of about 15 $\mu$m. Exolit® AP 462 is a fine-particle white powder of ammonium polyphosphate micro-encapsulated (i.e., coated) with melamine resin, and having a particle size (d50) of about 20 $\mu$m. Exolit® AP 740 F is a fine-particle white powder having a size (d50) of 8-12 $\mu$m, and is based on ammonium polyphosphate which develops its effectiveness through phosphorus/nitrogen synergism and intumescence. Particles mentioned above are non-hygroscopic and non-flammable.

Other commercially available fire retardant products include Melapur MC25, MC50, MCXL, 200, 200/70, 200FF, MP. A specific example is Melapur 200 from BASF SE (Ludwigshafen, Germany), particles of melamine polyphosphate containing 42%-44% by weight of nitrogen and 12% by weight of phosphor.

Examples of commercially available aluminium hydroxide and alumina trihydrate (ATH) particles are Hymod® grades and Martinal® grades from Huber Engineered Materials. A specific example is Martinal ON-320 with median particle size (d50) of 20 $\mu$m and a density of 2.4 g/cm$^3$.

The fire retardant veil may have toughening particles dispersed therein in addition to the fire retardant particles to impart additional damage tolerance and damage resistance properties to the cured composite laminate in which the veil is incorporated as an interlaminar material.

The particles that are suitable for the purposes disclosed herein include thermoplastic and elastomeric particles, composite particles formed from a mixture of different materials, and core-shell particles. Core-shell particle refer to a particle having a core surrounded by one or more shells.

More specifically, the toughening particles may be particles of polymers selected from: aliphatic polyamides (PA), cycloaliphatic polyamides, aromatic polyamides, polyphthalamide (PPA), ether or ester block polyamides (PEBAX, PEBA), polyaryletherketones (PAEK), such as polyetheretherketone (PEEK) and polyetherketoneketone (PEKK), polyphenylene sulfide (PPS), polyamideimide (PAI),polyphenyleneoxides (PPO), polyesters, polyurethanes, thermoplastic polyurethanes, polyethers, polyethernitriles, polybenzimidazoles, thermoplastic elastomers, liquid crystal polymers (LCPs), copolymers thereof, combinations thereof, and derivatives thereof.

Suitable toughening particles also include particles of crosslinked thermoplastic polymer such as those described in U.S. Patent No. 8,846,818 and U.S. Publication No. 2010/0304118.

Toughening particles may be insoluble or soluble in thermoset resins such as epoxy. Resin-soluble thermoplastic particles include particles of thermoplastic polymers selected from: polyarylsulfones (including polyethersulfone (PES), polyetherethersulfone (PEES), PES-PEES copolymer), polyetherimide (PEI) and polyimides (PI). These resin-soluble thermoplastic particles are solid particles at ambient temperature (20°C-25°C) but will dissolve in a thermoset resin when the resin is heated, for example, during the curing cycle of the thermoset resin. Consequently, these particles do not remain as discreet particles in the cured resin matrix.

As used herein, "dissolve" in a resin means forming a homogeneous or continuous phase with the resin. "Discrete particle" as used herein refers to a particle which is discernible in a matrix resin, and which may be detected by using Scanning Electron Microscopy (SEM), Optical Microscopy, or Differential Interference Contrast microscopy (DIC).

For the purposes disclosed herein, the toughening particles may have a particle size distribution (d50) of less than 100 $\mu$m, particularly, within the range of 10 $\mu$m - 50 $\mu$m, or within the range of 15 $\mu$m - 35 $\mu$m, as measured by a laser diffraction technique, for example, using a Malvern Mastersizer 2000 instrument, which operates in the 0.002 nanometer - 2000 micron range.

The amount of toughening particles in the fire retardant veil may be from 5% to 50% by weight based on the total weight of the veil. The combined amount of fire retardant particles and toughening particles may be in the range of 25% to 85% by weight based on the total weight of the fire retardant veil.

When the hybrid veil is incorporated into fibre-reinforced polymer composites, the particles may function as an interlaminar toughening material.

Veil Manufacturing

The hybrid veil has a sufficient amount of binder to hold the fibres and polymeric particles together but the binder amount is small enough to leave the resulting veil porous and permeable to fluids (liquid and gas). Through-the-thickness air permeability of the veil can be measured according to a saturated flow experiment at a constant volume flow rate. This method involves recording the pressure drop through a test specimen. The recorded pressure drop is then used to determine the permeability of the specimen using the following pressure drop formula:

$$K3 = \frac{Q\,\eta\,h}{\Delta P\,A}$$

where

K3 = permeability
Q = Volume flow rate
$\eta$ = Viscosity of the test fluid
h= Thickness of the specimen
$\Delta$P= pressure drop across the specimen
A= cross sectional area of the cylindrical flow channel.

The pressure transducers, which are mounted on either side of the specimen, record the pressure drop of the test fluid, which is identical to the fluid used for the in-plane experiment. A National Instruments LabVIEW™ program can be used to acquire and evaluate the experimental data to produce a permeability value for this through-thickness data.

The amount of binder in the veil may be from about 2% to about 40% by weight, in some embodiments, about 5% to about 25% by weight, in other embodiments, about 10% to about 20% by weight, based on the total weight of the fire retardant veil. The binder may be a thermoplastic, thermosetting or elastomeric binder. Suitable binders include vinyls such as poly vinyl alcohol (PVA), poly ethylene vinyl alcohol (PEVOH), poly vinyl acetate, poly vinyl ether, poly vinyl chloride (PVC) and poly vinyl ester, butadienes such as poly styrene butadiene and polybutadiene acrylonitrile, silicones, polyesters, co-polyesters, polyamides, co-polyamides, cross-linked polyesters, acrylics such as styrene acrylics and acrylonitrile acrylics, epoxies, phenoxies, phenolics, polyurethanes, phenol-formaldehyde or urea-formaldehyde resins, combinations and copolymers thereof. Examples of commercially available binders include Acronal® 888 and Acrodur® 950 acrylic binders from BASF, Baybond® PU330 and XP2569 from Bayer, Vinamul® 8828 from Celanese Corp., Filco® 309 from COIM.

The fire retardant veil discussed herein may be produced by a conventional wet-laid process, as an example. In a wet-laid process, chopped fibres and particles are dispersed in aqueous slurry which may contain a binder, and optionally, additives such as surfactant(s), viscosity modifier(s), defoaming agent(s), drainage aids and/or other chemical agents. The specific additives are selected to achieve a stable dispersion of fibres in water for the duration of the wet-laid manufacturing process. Once the chopped fibres are introduced into the slurry, the slurry is intensely agitated so that the fibres become dispersed. The slurry containing the fibres and particles is then deposited onto a moving screen where a substantial portion of the water is removed to form a sheet. Subsequently, the liquid may be removed from the sheet by vacuum and/or hot air drying. When both liquid removal methods are used, it is preferred that hot air drying is applied later as it may be used to melt or cure the binder. Such wet-laid processes are typically used when a uniform distribution of fibres and/or weight is desired.

Composite Laminates

The fire retardant veil disclosed herein is particularly suitable as an interlayer or interleaf in a composite laminate. In one embodiment, the composite laminate is a layup of prepregs arranged in a stacking arrangement and at least one fire retardant veil is interposed or interleaved between two adjacent prepregs. In a preferred embodiment, there is a plurality of fire retardant veils interleaving the prepreg layup with each veil interposed between adjacent prepreg plies.

The term "prepreg" as used herein refers to a layer of reinforcement fibres that has been pre-impregnated with a curable matrix resin within at least a portion of the fibrous volume. The curable matrix resin contains one or more thermoset resins as major components. The matrix resin impregnating the reinforcement fibres may be in a partially cured or uncured state. The prepreg is a pliable or flexible material that is ready for laying up and shaping into a three-dimensional configuration, followed by curing into a final composite part. Consolidation by applying pressure (with or without heat) may be carried out prior to curing to prevent the formation of voids within the layup. This type of prepregs is particularly suitable for manufacturing load-bearing structural parts, such as wings, fuselages, bulkheads and control surfaces of aircrafts. Important properties of the cured prepregs are high strength and stiffness with reduced weight.

The term "impregnate" as used herein refers to the introduction of a curable matrix resin material to reinforcement fibres so as to partially or fully encapsulate the fibres with the resin. The matrix resin for making prepregs may take the form of resin films or liquids. Moreover, the matrix resin is in a curable or uncured state prior to bonding. Impregnation may be facilitated by the application heat and/or pressure.

The layer of reinforcement fibres in the prepreg may be in the form of continuous, unidirectionally-aligned (or "unidirectional") fibres or tows, woven fabric, or nonwoven multiaxial fabric (e.g. non-crimped fabric or NCF). Continuous tows are made up of multiple fibre filaments, for example, 3000-24,000 filaments.

The reinforcement fibres may be made of materials selected from, but are not limited to, glass (including Electrical or E-glass), carbon (including graphite), aramid, polyamide, high-modulus polyethylene (PE), polyester, poly-p-phenylene-benzoxazole (PBO), boron, quartz, basalt, ceramic, and combinations thereof. For the fabrication of high-strength composite materials, e.g., materials for aerospace and automotive applications, it is preferred that the reinforcement fibres have the tensile strength of greater than 500 ksi (or 3447 MPa) as measured according to ASTM C1557 - 14.

In a preferred embodiment, the reinforcement fibres in the prepregs are continuous unidirectional carbon or graphite fibres, lying in the same plane. The prepregs within the layup may be positioned in a selected orientation with respect to one another. For example, the prepreg layup may include prepregs having unidirectional fibres oriented at a selected angle θ, such as 0°, 45°, or 90°, with respect to the length of the layup.

Upon consolidation and curing of the prepreg layup, the matrix resin in the prepregs penetrates through the voids or gaps in the interleaving, porous veil(s), resulting in an integrated composite structure. Consolidation refers to a process that takes place under the action of one or more of heating, vacuuming, and applied pressure, whereby the matrix resin flows so as to displace void spaces. For example, consolidation may result in, but is not limited to, flow of resin into void spaces between fibres in the prepreg, void spaces between prepregs, and the like. Consolidation and curing may be performed in a single stage or separately.

Preform Configured for Resin Infusion

In another embodiment, one or more of the fire retardant veil disclosed herein is/are used as interlayer(s) or interleaf(s) in a fibrous preform configured for receiving liquid resin via resin infusion process such as RTM and VaRTM. The fibrous preform consists of multiple layers of dry reinforcement fibres with one or more fire retardant veils interposed between adjacent layers of dry reinforcement fibres. The layers of dry reinforcement fibres are composed mostly of fibres; they are porous and are permeable to liquid.

The layers of reinforcement fibres in the preform may be any type of textiles known in the prior art for manufacturing composite materials. Examples of suitable fabric types or configurations include, but are not limited to: all woven fabrics, examples are plain weave, twill weave, sateen weave, spiral weave, and uni-weave; all multiaxial fabrics, examples of which include, warp-knitted fabrics, and non-crimp fabrics (NCF); knitted fabrics; braided fabrics; all non-woven fabrics, examples of which include, but are not limited to, mat fabrics composed of chopped and/or continuous fibre filaments, felts, and combinations of the aforementioned fabric types. The reinforcement fibres in the preform are made of materials disclosed above in reference to reinforcement fibres for prepregs. In preferred embodiments, at least some of the fibre layers in the preform are composed of carbon or graphite fibres.

The fire retardant veil may be attached to a fabric ply to form a modified fabric that may be used to form a fibrous preform for resin infusion. The attachment of the veil to the fabric may be carried out by either a stitching or knitting yarn or by melting and consolidation of a binder in between the veil and the fabric. In one embodiment, one or more fire retardant veils are incorporated into a multiaxial, non-crimped fabric (NCF). NCF typically consists of non-crimped fiber layers, which are connected by stitching yarns. Each fibre layer in the NCF consists of continuous unidirectional fibres that are oriented in a direction different from the fibres in another fiber layer. The fire retardant veil may interposed between layers of unidirectional fibres in the NCF structure, or attached to the NCF as an outermost layer.

The mold for liquid resin infusion may be a two-component, closed mold or a vacuum bag sealed, single-sided mold. The use of two-component, closed mold is well known and is described in, for example, U.S. Patent No. 4,891,176. The use of vacuum bag sealed, single-sided mold is also known, see for example, U.S. Patent Nos. 4,942,013, 4,902,215, 6,257,858, and 8,652,371.

Matrix resin

The curable matrix resin for impregnating or infusing the reinforcement fibres and preforms discussed above is preferably a hardenable or thermoset resin containing one or more uncured thermoset resins, which include, but are not limited to, epoxy resins, imides (such as polyimide or bismaleimide), vinyl ester resins, cyanate ester resins, isocyanate modified epoxy resins, phenolic resins, furanic resins, benzoxazines, formaldehyde condensate resins (such as with urea, melamine or phenol), polyesters, acrylics, hybrids, blends and combinations thereof. Upon curing of the curable matrix resin, the cured material becomes irreversibly hardened.

Suitable epoxy resins include polyglycidyl derivatives of aromatic diamine, aromatic mono primary amines, aminophenols, polyhydric phenols, polyhydric alcohols, polycarboxylic acids. Examples of suitable epoxy resins include polyglycidyl ethers of the bisphenols such as bisphenol A, bisphenol F, bisphenol S and bisphenol K; and polyglycidyl ethers of cresol and phenol based novolacs.

Specific examples are tetraglycidyl derivatives of 4,4'-diaminodiphenyl methane (TGDDM), resorcinol diglycidyl ether, triglycidyl-p-aminophenol, triglycidyl-m-aminophenol, bromobisphenol F diglycidyl ether, tetraglycidyl derivatives of diaminodiphenylmethane, trihydroxyphenyl methane triglycidyl ether, polyglycidylether of phenol-formaldehyde novolac, polyglycidylether of o-cresol novolac or tetraglycidyl ether of tetraphenylethane.

Commercially available epoxy resins suitable for use in the the host matrix resin include N,N,N',N'-tetraglycidyl diamino diphenylmethane (e.g. MY 9663, MY 720, and MY 721 from Huntsman); N,N,N',N'-tetraglycidyl-bis(4-aminophenyl)-1,4-diiso-propylbenzene (e.g. EPON 1071 from Momentive); N,N,N',N'-tetraclycidyl-bis(4-amino-3,5-dimethylphenyl)-1,4-diisopropylbenzene, (e.g. EPON 1072 from Momentive); triglycidyl ethers of p-aminophenol (e.g. MY 0510 from Hunstman); triglycidyl ethers of m-aminophenol (e.g. MY 0610 from Hunstman); diglycidyl ethers of bisphenol A based materials such as 2,2-bis(4,4'-dihydroxy phenyl) propane (e.g. DER 661 from Dow, or EPON 828 from Momentive, and Novolac resins preferably of viscosity 8-20 Pa·s at 25°C; glycidyl ethers of phenol Novolac resins (e.g. DEN 431 or DEN 438 from Dow); di-cyclopentadiene-based phenolic novolac (e.g. Tactix 556 from Huntsman); diglycidyl 1,2-phthalate (e.g. GLY CEL A-100); diglycidyl derivative of dihydroxy diphenyl methane (Bisphenol F) (e.g. PY 306 from Huntsman). Other epoxy resins include cycloaliphatics such as 3',4'-epoxycyclohexyl-3,4-epoxycyclohexane carboxylate (e.g. CY 179 from Huntsman).

The curable matrix resin may also include a phosphorous-modified epoxy or phenolic resin to impart additional fire retardant performance. This modified resin can be obtained by reacting a multifunctional epoxy or phenolic resin (e.g. bisphenol A diglycidyl ether, phenolic polyglycidyl ether, cresol novolac resin) with an organic phosphinic acid (e.g. methanephosphonous acid and diethylphosphinic acid) or anhydride thereof. A specific example is a derivative of DOPO (or 9,10-Dihydro-9-oxa-10-phosphaphenanthrene 10-oxide) which is prepared by reacting a multifunctional epoxy with DOPO. The phosphorus-modified epoxy resins remain reactive prior to curing and can be cured using conventional curing agents. The phosphorus content in the phosphorous-modified epoxy resin may be within the range of about 3% to about 11% by weight. The phosphorous modified epoxy resins or phenolic resins may be liquid or solid at room temperature (20°C-25°C) and generally have an epoxy equivalent weight (g/eq) of from about 170 to about 450 as determined by ASTM D-1652. Examples of commercially available, flame retardant, phosphorous-modified epoxy resins include SEN-6030, 6065, 6070, 6075, 6085, 6095, SENP-6630, SEN-275MC 75, SEN-290MC 65, XEN-0140, XEN-0230 from Shin-A T&C Co.; HFC-350, HPC 9080-60P, and EXB-X available from DIC Corp. The phosphorus content in these resins is within the range of 3% - 11% by weight.

The curable matrix resin may further comprise red phosphorous. Generally, the addition of 5% to 10% by weight of red phosphorus can reduce the risk of fire ignition.

Generally, the curable matrix resin contains one or more thermoset resins in combination with other additives such as curing agents, curing catalysts, comonomers, rheology control agents, tackifiers, inorganic or organic fillers, thermoplastic and/or elastomeric polymers as toughening agents, stabilizers, inhibitors, pigments, dyes, flame retardants, reactive diluents, and other additives well known to those skilled in the art for modifying the properties of the matrix resin before and/or after curing. However, optional additives that can be added to the resin for liquid resin infusion are limited by size and the low-viscosity requirement.

If present, toughening agents for the curable matrix resin may include, but are not limited to, homopolymers or copolymers either alone or in combination of polyamides, copolyamides, polyimides, aramids, polyketones, polyetherimides (PEI), polyetherketones (PEK), polyetherketoneketone (PEKK), polyetheretherketones (PEEK), polyethersulfones (PES), polyetherethersulfones (PEES), polyesters, polyurethanes, polysulphones, polysulphides, polyphenylene oxide (PPO) and modified PPO, poly(ethylene oxide) (PEO) and polypropylene oxide, polystyrenes, polybutadienes, polyacrylates, polymethacrylates, polyacrylics, polyphenylsulfone, high performance hydrocarbon polymers, liquid crystal polymers, elastomers and segmented elastomers. The total amount of toughening agent(s) in the matrix resin may be up to 25% by weight based on the total weight of the composition.

In some embodiments, the matrix resin contains one or more polyepoxides and a curing agent, which constitutes more than 50% (in weight of the total resin composition, and less than 25% of thermoplastic material such as thermoplastic polymer.

The addition of curing agent(s) and/or catalyst(s) in the curable matrix resin is optional, but the use of such may increase the cure rate and/or reduce the cure temperatures, if desired. The curing agent is suitably selected from known curing agents, for example, aromatic or aliphatic amines, or guanidine derivatives. An aromatic amine curing agent is preferred, preferably an aromatic amine having at least two amino groups per molecule, and particularly preferable are diaminodiphenyl sulphones, for instance where the amino groups are in the meta- or in the para-positions with respect to the sulphone group. Particular examples are 3,3'- and 4-,4'-diaminodiphenylsulphone (DDS); methylenedianiline; bis(4-amino-3,5-dimethylphenyl)-1,4-diisopropylbenzene; bis(4-aminophenyl)-1,4-diisopropylbenzene; 4,4'methylenebis-(2,6-diethyl)-aniline (MDEA from Lonza); 4,4'methylenebis-(3-chloro, 2,6-diethyl)-aniline (MCDEA from Lonza); 4,4'methylenebis-(2,6-diisopropyl)-aniline (M-DIPA from Lonza); 3,5-diethyl toluene-2,4/2,6-diamine (D-ETDA 80 from Lonza); 4,4'methylenebis-(2-isopropyl-6-methyl)-aniline (M-MIPA from Lonza); 4-chlorophenyl-N,N-dimethyl-urea (e.g. Monuron); 3,4-dichlorophenyl-N,N-dimethyl-urea (e.g. DIURON TM) and dicyanodiamide (e.g. AMICURE TM CG 1200 from Pacific Anchor Chemical).

Suitable curing agents also include anhydrides, particularly polycarboxylic anhydrides, such as nadic anhydride, methylnadic anhydride, phthalic anhydride, tetrahydrophthalic anhydride, hexahydrophthalic anhydride, methyltetrahydrophthalic anhydride, endomethylene-tetrahydrophtalic anhydride, and trimellitic anhydride.

Application

The composite laminates and resin infusion methods disclosed herein are suitable for fabricating primary and secondary aircraft structures, space and ballistics structures. Such structural components include composite fuselage and wing structures. Notably, the composite laminates are particularly suitable for the fabrication of load-bearing or impact-resisting structures that would need to satisfy flammability requirements. The composite laminates and resin infusion methods disclosed herein are also applicable to the manufacture of components for other transportation applications, including aeronautical, nautical, automotive, and railroad.

Terminology

"Curing" or "cure" in the present disclosure refers to the irreversible hardening of a pre-polymer material, a resin or monomers brought about by heating at elevated temperatures . The term "curable" in reference to composition means that the composition is capable of being cured into a hardened or thermoset state.
The term "about" as used in the present disclosure represents an amount close to the stated amount that still performs a desired function or achieves a desired result. For example, the term "about" may refer to an amount that is within less than 1% of the stated amount.

**EXAMPLES**

Composite panels produced in the following Examples were tested according to the following procedure for flammability and mechanical performance evaluation.
Compression After Impact (CAI) tests were performed on 4 inches x 6 inches coupons according to ASTM D7136/37. Compression After Impact (CAI) after a 30 Joule impact was determined using 24-ply quasi-isotropic laminates. Measurements were performed at room temperature on coupons extracted from defect free panels prepared in accordance with EN 2565 method B and cured for 2 hours at 180°C.
A crosshead of 0.5 mm/min was selected. Load was continuously recorded as a function of time and the break failure load ($P_R$). The compression strength after impact at a specific impact energy level is defined by the following formula:

$$\sigma_r = \frac{P_r}{w \cdot t} (MPa)$$

where

$P_r$ is the break failure load (N)
w is the specimen width (mm)
t is the thickness of the specimen (mm).

Inter-laminar fracture toughness in mode I ($G_{Ic}$) was determined using a 16-ply laminate of unidirectional prepregs cured with a fluoro-ethylene polymer (FEP) film as crack starter at the mid plane. $G_{Ic}$ measurements were performed at room temperature according to EN 6033 on coupons extracted from defect free panels prepared in accordance with EN 2565 method B and cured for 2 hours at 180°C.
Open Hole Compression (OHC) was determined using a 16-ply quasi-isotropic laminate tested at room temperature according to ASTM D6484-09. Hole diameter was 6.35 mm.
60-sec Vertical burning test was performed according to FAR 25.853 or CS25 App.F Part-I (a)(1)(i). Samples are suspended vertically and exposed to a flame of 38mm high. The flame is applied for a period of 60 seconds. After this period, the burner is removed and some parameters are recorded:
a. *Flame Time:* Flame time is the time in seconds that the specimen continues to flame after the burner flame is removed from beneath the specimen. Surface burning resulting in a glow but not in a flame is not included.
b. *Drip flame time:* Drip flame time is the time in seconds that any flaming material continues to flame after falling from the specimen. If there is more than one drip, the drip flame time reported is that of the longest flaming drip. If succeeding flaming drips reignite earlier drips that flamed, the drip flame time reported is the total of all flaming drips.
c. *Burn Length:* Burn length is the distance from the original specimen edge to the farthest evidence of damage to the test specimen due to that area's combustion including areas of partial consumption, charring, or embrittlement but not including areas sooted, stained, warped, or discoloured or areas where material has shrunk or melted away from the heat.

Smoke and Toxicity tests were performed in a closed chamber (NBS- smoke density chamber) compliant to ASTM E662. Coupons having a dimension of 75x75x1.6 mm$^3$ were conditioned at 21 $\pm$ 3 ° C - 50 $\pm$ 5 % r.h. for 24 h and subjected to a constant irradiation of 25 KW/m$^2$. 3 tests were performed for each sample. The duration of each test is 240 seconds. After this time the specific optical density of smoke accumulated in the chamber $D_m$ and the concentration of toxic species in the smoke are determined. The measurement of the specific optical density (Ds) takes place by means of a photometric system. Through FAR 25.853 or CS25 App.F Part V, the average $^4D_m$ to the 4-minute of test shall not exceed 200. The value of the concentration of selected toxic species in the smoke such as: carbon oxide (CO), Nitrogen oxides (NOx), Sulfur Dioxide (SO$_2$) are measured using colorimetric Draeger® pipe.

All particle size distributions disclosed in the Examples were determined by a Malvern Mastersizer 2000.

Materials

Exolit® AP462 ("AP462") is ammonium polyphosphate particles with a melamine based coating and d50 particle size of 20 microns supplied by Clariant.

Araldite® PY 306 is a Bisphenol F diglycidlyl ether resin available from Huntsman. Araldite® MY 0510 is a triglycidyl ether of p-aminophenol resin available from Huntsman.

SUMIKAEXCEL 5003P is a polyethersulfone polymer available from Sumitomo Chemical.

4,4'DDS refers to 4,4'-diaminodiphenylsulphone.

## Example 1

*Fire retardant veils*

Four variants of carbon veils (labeled as Control 1.0, Veils 1.0, 1.1 and 1.2) were manufactured by a wet-laid process using chopped IM7 carbon fibres and styrene acrylic binder. Veils 1.0, 1.1, 1.2 also contained flame-retardant particles, Exolit® AP462, which were incorporated during the veil manufacture. Control 1.0 veil does not contain any AP462 particles. Table 1 show the properties of the veils, including areal weight (g/m$^2$), carbon content (g/m$^2$), AP462 content (g/m$^2$), and particles to carbon fibres (Particles: Fibres) weight ratio.

TABLE 1 - Control and exemplary fire retardant veils composition

|  | Total areal weight (g/m$^2$) | Carbon fibers areal weight (g/m$^2$) | AP462 areal weight (g/m$^2$) | Particles:Fibres ratio |
|---|---|---|---|---|
| Control 1.0 | 4 | 4 | 0 | 0 |
| Veil 1.0 | 8 | 4 | 4 | 1 |
| Veil 1.1 | 10.5 | 4 | 6.5 | 1.62 |
| Veil 1.2 | 15 | 5 | 10 | 2 |

FIG. 2 shows a top-view image of Veil 1.2, optically magnified in optical microscope system.

## Example 2

*Fire retardant composite laminates*

Control Resin 1.0 was manufactured according to the formulation shown in Table 2. All amounts are reported in weight by weight (w/w) percentage.

TABLE 2 - Formulation for Control Resin 1.0

|  | Control Resin 1.0 |
|---|---|
| Araldite® PY306 | 26.3 |
| Araldite® MY0510 | 26.3 |

(continued)

|  | Control Resin 1.0 |
|---|---|
| **SUMIKAEXCEL 5003P** | 19.5 |
| **4,4'DDS** | 28.2 |

Control Resin composition 1.0 was used for manufacturing a baseline prepreg, using a film impregnation process. Resin films were produced by coating the resin composition Control 1.0 onto a release paper. Next, two of such resin films were laminated onto both sides of a continuous layer of unidirectional carbon fibres (IM65 E23-24K-830dtex from Toho Tenax, USA), under the aid of heat and pressure, forming a prepreg having a film areal weight (FAW) of 190 gsm (or g/m$^2$) and a resin content of 35% w/w.

A 16 plies prepreg layup with [+,0,-,90]$_{2s}$ configuration and a thickness of about 3.2 mm was formed from the baseline prepreg, followed by consolidation and curing at 180°C for 2 hours, resulting in Control Panel 2.0.

A similar prepreg layup was fabricated using the same prepreg material and layup configuration but with Control 1.0 veil (from Example 1) interleaved between prepreg plies. The prepreg layup was consolidated and cured as before. The cured laminate was labeled as Panel 2.1.

Each of Panels 2.2, 2.3, 2.4 was fabricated using the same prepreg material and layup configuration but with Veils 1.0, 1.1, 1.2 (from Example 1), respectively, interleaved between prepreg plies. The prepreg layups were consolidated and cured as before. The cured laminates were labeled as Panels 2.2, 2.3, 2.4.

Test coupons were extracted from the cured panels for 60-sec Vertical Burning Tests and Smoke and Toxicity Tests. The test results are shown in TABLE 3 (Vertical Burning Test Results) and TABLE 4 (Smoke and Toxicity Test Results).

**TABLE** 3 - Vertical Burning Test Results

|  | Interleaving veil | Flame time (s) | Drip extinguishing flame time (s) | Burn length (cm) |
|---|---|---|---|---|
| **Control Panel 2.0** | None | 17 ± 5 | 0 | 2.4 ± 0.2 |
| **Comparative Panel 2.1** | Control 1.0 | 24 ± 4 | 0 | 2.1 ± 0.5 |
| **Panel 2.2** | Veil 1.0 | 12 ± 3 | 0 | 1.7 ± 0.2 |
| **Panel 2.3** | Veil 1.1 | 12 ± 2 | 0 | 1.4 ± 0.2 |
| **Panel 2.4** | Veil 1.2 | 10 ± 2 | 0 | 1.6 ± 0.2 |

**TABLE 4** - Smoke and Toxicity Test Results

|  | Interleaving veil | Smoke (4Dm) | SO$_2$ | CO | NOx |
|---|---|---|---|---|---|
| **Control Panel 2.0** | None | 47 ± 5 | 100 | 150 ± 30 | 60 ± 10 |
| **Comparative Panel 2.1** | Control 1.0 | 84 ± 23 | 100 | 100 ± 15 | 40 ± 8 |
| **Panel 2.2** | Veil 1.0 | 36 ± 7 | 20 ± 3 | 50 ± 10 | 10 ± 2 |
| **Panel 2.3** | Veil 1.1 | 39 ± 23 | 20 ± 3 | 50 ± 10 | 5 ± 1 |
| **Panel 2.4** | Veil 1.2 | 21 ± 7 | 20 ± 3 | 50 ± 10 | 5 ± 1 |

The results in Table 3 show that Control Panel 2.0 (having no interlaminar flame-retardant particles, no veil) provided a poor flammability performance and a flame time (17 sec) which is above the maximum requirements set by standard regulation. The addition of Control 1.0 veil (carbon fibres only) at the interlaminar region between the plies provided a negative effect by increasing the flame time to 24 sec. In contrast, Panels 2.2, 2.3 and 2.4, having a multifunctional veil comprising carbon fibres and AP462 particles in the interleaving region, provided a flame time equal to 10-12 sec, which is about 50% reduction comparing to a similar panel having an interleaving carbon veil only with no particles. It was found that the addition of the disclosed fire retardant veil also provides a reduction of the burn-length. Such reduction in flame-time and burn length is a significant improvement of the composite self-extinguishing capabilities.

The results in Table 4 show that Control Panel 2.0 (having no interlaminar flame-retardant particles, no veil) produced some amount of optical density of smoke and concentration of toxic gasses. Moreover the SO$_2$ content is

equal to 100 ppm, which is at the limit set by common aerospace industry standards for cabin interior materials (BSS 7239 Boeing standard and AITM 3.0005 Airbus standard). The addition of the Control 1.0 veil (carbon fibres only) provided a neutral or negative effect, increasing the level of optical density of smoke and $SO_2$ content. Such level would be dangerous if this emission occurred in an aircraft cabin or other similar transportation compartments for the passengers. It was found that the presence of the multifunctional veils (having a combination of carbon fibres and AP462 particles) in Panels 2.2, 2.3 and 2.4 provided a significant reduction in the level of optical density of smoke and a significant reduction in the concentration of the all the measured toxic gasses. Such reduction in optical density of smoke and concentration of toxic gasses would allow the disclosed materials to be used for cabin interiors and for reducing risks on passengers in case of fire related accident.

Test coupons were also extracted from the cured panels to determine CAI, fracture toughness ($G_{Ic}$) and OHC. The results are shown in Table 5.

TABLE 5 - Mechanical Test Results

|  | Interleaving veil | CAI@30J (MPa) | $G_{Ic}$ (J/m$^2$) | OHC (MPa) |
|---|---|---|---|---|
| **Control Panel 2.0** | - | 209 ± 11 | 289 ± 16 | 294 ± 3 |
| **Comparative Panel 2.1** | Control 1.0 | 259 ± 12 | 321 ± 20 | 334 ± 5 |
| **Panel 2.2** | Veil 1.0 | 284 ± 15 | 304 ± 5 | 360 ± 6 |
| **Panel 2.3** | Veil 1.1 | 293 ± 7 | 293 ± 4 | 363 ± 5 |
| **Panel 2.4** | Veil 1.2 | 276 ± 12 | 408 ± 16 | 357 ± 7 |

The results in Table 5 show that the combination of carbon fibres and AP462 particles in the interlaminar region provided more than 20% improvement in CAI and OHC comparing to panels having no interlaminar veil or particles. The combination of carbon fibres and AP462 particles also provided no detrimental effect on Inter-laminar fracture toughness in mode I ($G_{Ic}$) values comparing to a similar panels having no interlaminar veil or particles.

**Claims**

1. A composite laminate comprising:

   a layup of prepreg plies arranged in a stacking arrangement, each prepreg ply comprising a layer of reinforcement fibres impregnated with a curable matrix resin; and
   at least one nonwoven veil interleaved or interposed between two adjacent prepreg plies;
   wherein the nonwoven veil is porous, permeable to liquid, and comprises:

   (a) intermingled, randomly arranged carbon fibres in the form of a nonwoven structure;
   (b) fire retardant particles dispersed throughout the nonwoven structure such that the majority of the fire-retardant particles are penetrating through the thickness of the nonwoven structure, said fire retardant particles being selected from particles of: ammonium polyphosphate, ammonium polyphosphate encapsulated within a melamine or melamine-containing resin, polyphosphazene, melamine cyanurate, melamine phosphate, melamine polyphosphate, melamine poly(metal phosphates), metal oxides including aluminium hydroxide ($Al(OH)_3$), alumina trihydrate (ATH), zinc borate, alkali metal silicates; and
   (c) a polymeric or resinous binder, preferably, in an amount of 5% to 25% by weight based on the total weight of the veil,

   wherein the nonwoven veil has an areal weight of up to 30 gsm, preferably, 5 gsm to 20 gsm, the weight ratio of fibres in the veil to fire retardant particles is from 2:1 to 1:3, and the fire retardant particles have a mean particle size (d50) from 5 to 35 microns as determined by laser diffraction, according to the method of the description.

2. The composite laminate according to claim 1, wherein the fire retardant particles are thermally expandable when exposed to fire or temperature above 200°C.

3. The composite laminate according to any one of the preceding claims, wherein the binder is selected from: poly vinyl alcohol (PVA). poly ethylene vinyl alcohol (PEVOH), poly vinyl acetate, poly vinyl ether, poly vinyl chloride (PVC) and poly vinyl ester, butadienes such as poly styrene butadiene and polybutadiene acrylonitrile, silicones, polyesters, co-polyesters, polyamides, co-polyamides, cross-linked polyesters, acrylics such as styrene acrylics and acrylonitrile acrylics, epoxies, phenoxies, phenolics, polyurethanes, phenol-formaldehyde and urea-formaldehyde resins, copolymers thereof, and combinations thereof.

4. The composite laminate according to any one of the preceding claims, wherein the nonwoven veil further comprises toughening particles formed from a material selected from: thermoplastic polymers, elastomeric polymers, combination of thermoplastic and elastomeric polymers, and crosslinked thermoplastic polymers.

5. The composite laminate according to any one of the preceding claims, wherein the reinforcement fibres in each prepreg ply are in the form of unidirectional fibers, and the curable matrix resin of the prepreg ply comprises one or more polyepoxides, at least one curing agent, and less than 25% (in weight percentage) of thermoplastic material or thermoplastic polymer based on the total weight of the curable matrix resin.

6. A fibrous preform configured for liquid resin infusion, comprising:

a plurality of fibrous layers that are permeable to liquid resin; and
at least one nonwoven veil interleaved or interposed between two adjacent fibrous layers;
wherein the nonwoven veil is porous, permeable to liquid, and comprises:

(a) intermingled, randomly arranged carbon fibres in the form of a nonwoven structure;
(b) fire retardant particles dispersed throughout the nonwoven structure such that the majority of the fire-retardant particles are penetrating through the thickness of the nonwoven structure, said fire retardant particles being selected from particles of: ammonium polyphosphate, ammonium polyphosphate encapsulated within a melamine or melamine-containing resin, polyphosphazene, melamine cyanurate, melamine phosphate, melamine polyphosphate, melamine poly(metal phosphates), metal oxides including aluminium hydroxide ($Al(OH)_3$), alumina trihydrate (ATH), zinc borate, and alkali metal silicates; and
(c) a polymeric or resinous binder, preferably, in an amount of 5% to 25% by weight based on the total weight of the veil,

wherein the veil has an areal weight of up to 30 gsm, preferably up to 20 gsm, the weight ratio of fibres in the veil to fire retardant particles is from 2:1 to 1:3, and the fire retardant particles have a mean particle size (d50) from 5 to 35 microns as determined by laser diffraction, according to the method of the description.

7. The fibrous preform of claim 6, wherein the fibrous layers are selected from: layers of unidirectional fibres, woven fabrics, and multi-axial fabrics.

8. A method of making a composite structure, comprising:

infusing the fibrous preform according to claim 6 or 7 with a liquid resin comprising one or more thermoset resins and a curing agent; and
curing the resin-infused preform.

9. A fire retardant veil comprising (a) intermingled, randomly arranged carbon fibres, (b) fire retardant particles dispersed throughout the veil, and (c) a polymeric or resinous binder for binding the fibres and the particles together,

wherein the veil has an areal weight of up to 30 gsm, preferably up to 20 gsm,
wherein the fire retardant particles have a mean particle size (d50) from 5 to 35 microns as determined by laser diffraction, according to the method of the description, and are selected from particles of: ammonium polyphosphate, ammonium polyphosphate encapsulated within a melamine-containing resin, polyphosphazene, melamine cyanurate, melamine phosphate, melamine polyphosphate, melamine poly(metal phosphates), metal oxides including aluminium hydroxide ($Al(OH)_3$), alumina trihydrate (ATH), zinc borate, alkali metal silicates, and combinations thereof, and
wherein the weight ratio of fibres to fire retardant particles is from 2:1 to 1:3.

10. The fire retardant veil according to claim 9, wherein the binder is present in an amount of 5% to 25% by weight, or 10% to 20% by weight, based on the total weight of the veil.

**11.** The fire retardant veil according to claim 9 or 10, wherein the binder is selected from: poly vinyl alcohol (PVA). poly ethylene vinyl alcohol (PEVOH), poly vinyl acetate, poly vinyl ether, poly vinyl chloride (PVC) and poly vinyl ester, butadienes such as poly styrene butadiene and polybutadiene acrylonitrile, silicones, polyesters, co-polyesters, polyamides, co-polyamides, cross-linked polyesters, acrylics such as styrene acrylics and acrylonitrile acrylics, epoxies, phenoxies, phenolics, polyurethanes, phenol-formaldehyde and urea-formaldehyde resins, copolymers thereof, and combinations thereof.

**12.** The fire retardant veil according to any one of claims 9 to 11, further comprising toughening particles dispersed throughout the veil, said toughening particles being formed from a material selected from: thermoplastic polymers, elastomeric polymers, combination of thermoplastic and elastomeric polymers, and crosslinked thermoplastic polymers.

**13.** The fire retardant veil according to any one of claims 9 to 12, wherein the veil is a self-supporting structure, which is not attached to another layer or carrier.

**Patentansprüche**

**1.** Verbundlaminat, umfassend:

ein Layup von Prepreg-Lagen, das in einer Stapelanordnung angeordnet ist, wobei jede Prepreg-Lage eine Schicht aus Verstärkungsfasern, imprägniert mit einem härtbaren Matrixharz, umfasst; und
mindestens einen Vliesschleier, der zwischen zwei benachbarten Prepreg-Lagen verschachtelt oder angeordnet ist;
wobei der Vliesschleier porös und flüssigkeitsdurchlässig ist und umfasst:

(a) statistisch angeordnete Kohlefasern in Form einer Vliesstruktur, die darin durchsetzt vorliegen;
(b) über die gesamte Vliesstruktur dispergierte Flammhemmerpartikel, so dass die Mehrzahl der Flammhemmerpartikel die Dicke der Vliesstruktur durchdringt, wobei die Flammhemmerpartikel ausgewählt sind aus Partikeln von Ammoniumpolyphosphat, Ammoniumpolyphosphat, das in einem Melamin- oder melaminhaltigen Harz verkapselt ist, Polyphosphazen, Melamincyanurat, Melaminphosphat, Melaminpolyphosphat, Melaminpoly(metallphosphaten), Metalloxiden einschließlich Aluminiumhydroxid $(Al(OH)_3)$, Aluminiumoxidtrihydrat (ATH), Zinkborat, Alkalimetallsilikaten; und
(c) ein polymeres oder harzartiges Bindemittel, vorzugsweise in einer Menge von 5 Gew.% bis 25 Gew.%, bezogen auf das Gesamtgewicht des Schleiers,

wobei der Vliesschleier ein Flächengewicht von bis zu 30 g/m$^2$ (gsm), vorzugsweise 5 gsm bis 20 gsm hat, das Gewichtsverhältnis von Fasern in dem Schleier zu Flammhemmerpartikeln 2:1 bis 1:3 beträgt, und die Flammhemmerpartikel eine mittlere Partikelgröße (d50) von 5 bis 35 Mikrometern haben, bestimmt mittels Laserbeugung gemäß dem Verfahren in den technischen Angaben.

**2.** Verbundlaminat nach Anspruch 1, wobei die Flammhemmerpartikel thermisch expandierbar sind, wenn sie Feuer oder Temperatur über 200 °C ausgesetzt werden.

**3.** Verbundlaminat nach einem der vorhergehenden Ansprüche, wobei das Bindemittel ausgewählt ist aus Polyvinylalkohol (PVA), Polyethylen-Vinylalkohol (PEVOH), Polyvinylacetat, Polyvinylether, Polyvinylchlorid (PVC) und Polyvinylester, Butadienen wie Polystyrol-Butadien und Polybutadien-Acrylnitril, Silikonen, Polyestern, Copolyestern, Polyamiden, Copolyamiden, vernetzten Polyestern, Acrylverbindungen wie Styrol-Acrylverbindungen und Acrylnitril-Acrylverbindungen, Epoxyverbindungen, Phenoxyverbindungen, Phenolverbindungen, Polyurethanen, Phenol-Formaldehyd- und Harnstoff-Formaldehyd-Harzen, Copolymeren davon und Kombinationen davon.

**4.** Verbundlaminat nach einem der vorhergehenden Ansprüche, wobei der Vliesschleier des Weiteren Zähmacherpartikel umfasst, die aus einem Material ausgewählt aus thermoplastischen Polymeren, elastomeren Polymeren, Kombination von thermoplastischen und elastischen Polymeren und vernetzten thermoplastischen Polymeren gebildet sind.

**5.** Verbundlaminat nach einem der vorhergehenden Ansprüche, wobei die Verstärkungsfasern in jeder Prepreg-Lage in Form von unidirektionalen Fasern vorliegen, und das härtbare Matrixharz der Prepreg-Lage ein oder mehrere Polyepoxide, mindestens ein Härtungsmittel und weniger als 25 % (in Gewichtsprozent) thermoplastisches Material oder thermoplastisches Polymer umfasst, bezogen auf das Gesamtgewicht des härtbaren Matrixharzes.

6. Faservorform, die zur Flüssigharzinfusion ausgestaltet ist, umfassend:

eine Vielzahl von Faserschichten, die für Flüssigharz durchlässig sind; und
mindestens einen Vliesschleier, der zwischen zwei benachbarten Faserschichten verschachtelt oder angeordnet ist;
wobei der Vliesschleier porös und flüssigkeitsdurchlässig ist und umfasst:

(a) statistisch angeordnete Kohlefasern in Form einer Vliesstruktur, die durchsetzt darin vorliegen;
(b) über die gesamte Vliesstruktur dispergierte Flammhemmerpartikel, so dass die Mehrzahl der Flammhemmerpartikel die Dicke der Vliesstruktur durchdringt, wobei die Flammhemmerpartikel ausgewählt sind aus Partikeln von Ammoniumpolyphosphat, Ammoniumpolyphosphat, das in einem Melamin- oder melaminhaltigen Harz verkapselt ist, Polyphosphazen, Melamincyanurat, Melaminphosphat, Melaminpolyphosphat, Melaminpoly(metallphosphaten), Metalloxiden einschließlich Aluminiumhydroxid (Al(OH)$_3$), Aluminiumoxidtrihydrat (ATH), Zinkborat und Alkalimetallsilikaten; und
(c) ein polymeres oder harzartiges Bindemittel, vorzugsweise in einer Menge von 5 Gew.% bis 25 Gew.%, bezogen auf das Gesamtgewicht des Schleiers,

wobei der Schleier ein Flächengewicht von bis zu 30 gsm, vorzugsweise bis zu 20 gsm hat, das Gewichtsverhältnis von Fasern in dem Schleier zu Flammhemmerpartikeln 2:1 bis 1:3 beträgt, und die Flammhemmerpartikel eine mittlere Partikelgröße (d50) von 5 bis 35 Mikrometern haben, bestimmt mittels Laserbeugung gemäß dem Verfahren in den technischen Angaben.

7. Faservorform nach Anspruch 6, wobei die Faserschichten ausgewählt sind aus Schichten aus unidirektionalen Fasern, Vliesstoffen und mehrachsigen Stoffen.

8. Verfahren zum Fertigen einer Verbundstruktur, umfassend:

Infundieren der Faservorform gemäß Anspruch 6 oder 7 mit einem flüssigen Harz, das ein oder mehrere duroplastische Harze und ein Härtungsmittel umfasst; und
Härten der harzinfundierten Vorform.

9. Flammhemmender Schleier, umfassend (a) statistisch angeordnete Kohlefasern, die darin durchsetzt vorliegen, (b) Flammhemmerpartikel, die über den gesamten Schleier dispergiert sind, und (c) polymeres oder harzartiges Bindemittel, um die Fasern und die Partikel aneinander zu binden,

wobei der Schleier ein Flächengewicht bis zu 30 gsm, vorzugsweise bis zu 20 gsm hat,
wobei die Flammhemmerpartikel eine mittlere Partikelgröße (d50) von 5 bis 35 Mikrometern haben, bestimmt mittels Laserbeugung gemäß dem Verfahren in den technischen Angaben, und ausgewählt sind aus Partikeln von Ammoniumpolyphosphat, Ammoniumpolyphosphat, das innerhalb eines melaminhaltigen Harzes verkapselt ist, Polyphosphazen, Melamincyanurat, Melaminphosphat, Melaminpolyphosphat, Melaminpoly(metallphosphaten), Metalloxiden einschließlich Aluminiumhydroxid (Al(OH)$_3$), Aluminiumoxidtrihydrat (ATH), Zinkborat, Alkalimetallsilikaten und Kombinationen davon, und
wobei das Gewichtsverhältnis von Fasern zu Flammhemmerpartikeln 2:1 bis 1:3 beträgt.

10. Flammhemmender Schleier nach Anspruch 9, wobei das Bindemittel in einer Menge von 5 Gew.% bis 25 Gew.% oder 10 Gew.% bis 20 Gew.% vorhanden ist, bezogen auf das Gesamtgewicht des Schleiers.

11. Flammhemmender Schleier nach Anspruch 9 oder 10, wobei das Bindemittel ausgewählt ist aus Polyvinylalkohol (PVA), Polyethylen-Vinylalkohol (PEVOH), Polyvinylacetat, Polyvinylether, Polyvinylchlorid (PVC) und Polyvinylester, Butadienen wie Polystyrol-Butadien und Polybutadien-Acrylnitril, Silikonen, Polyestern, Copolyestern, Polyamiden, Copolyamiden, vernetzten Polyestern, Acrylverbindungen wie Styrol-Acrylverbindungen und Acrylnitril-Acrylverbindungen, Epoxyverbindungen, Phenoxyverbindungen, Phenolverbindungen, Polyurethanen, Phenol-Formaldehyd-Harz und Harnstoff-Formaldehyd-Harzen, Copolymeren davon und Kombinationen davon.

12. Flammhemmender Schleier nach einem der Ansprüche 9 bis 11, der des Weiteren Zähmacherpartikel umfasst, die über den gesamten Schleier dispergiert sind, wobei die Zähmacherpartikel aus einem Material ausgewählt aus thermoplastischen Polymeren, elastomeren Polymeren, Kombination aus thermoplastischen und elastischen Polymeren und vernetzten thermoplastischen Polymeren gebildet sind.

13. Flammhemmender Schleier nach einem der Ansprüche 9 bis 12, wobei der Schleier eine selbsttragende Struktur ist, die nicht an einer anderen Schicht oder einem Träger angebracht ist.


**Revendications**

1. Stratifié composite comprenant :

   un empilage de plis de préimprégné agencés en un agencement d'empilement, chaque pli de préimprégné comprenant une couche de fibres de renforcement imprégnées avec une résine de matrice durcissable ; et
   au moins un voile de non-tissé imbriqué ou interposé entre deux plis de préimprégné adjacents ;
   le voile de non-tissé étant poreux, perméable à un liquide, et comprenant :

      (a) des fibres de carbone entremêlées, agencées de manière aléatoire sous la forme d'une structure de non-tissé ;
      (b) des particules d'agent ignifugeant dispersées dans toute la structure de non-tissé de sorte que la majorité des particules d'agent ignifugeant pénètrent à travers l'épaisseur de la structure de non-tissé, lesdites particules d'agent ignifugeant étant choisies parmi des particules de : polyphosphate d'ammonium, polyphosphate d'ammonium encapsulé à l'intérieur d'une résine de mélamine ou contenant de la mélamine, polyphosphazène, cyanurate de mélamine, phosphate de mélamine, polyphosphate de mélamine, poly(phosphates métalliques) de mélamine, oxydes métalliques y compris l'hydroxyde d'aluminium ($Al(OH)_3$), trihydrate d'alumine (ATH), borate de zinc, silicates de métaux alcalins ; et
      (c) un liant polymérique ou résineux, préférablement, en une quantité de 5 % à 25 % en poids sur la base du poids total du voile,

   le voile de non-tissé ayant un poids surfacique allant jusqu'à 30 g/m², préférablement, 5 g/m² à 20 g/m², le rapport en poids de fibres dans le voile sur particules d'agent ignifugeant étant de 2 : 1 à 1 : 3, et des particules d'agent ignifugeant ayant une taille moyenne de particule (d50) de 5 à 35 microns telle que déterminée par diffraction laser, selon le procédé de la description.

2. Stratifié composite selon la revendication 1, les particules d'agent ignifugeant étant thermiquement expansibles lorsqu'elles sont exposées au feu ou à une température supérieure à 200 °C.

3. Stratifié composite selon l'une quelconque des revendications précédentes, le liant étant choisi parmi : résines de poly(alcool vinylique) (PVA), poly(éthylène alcool vinylique) (PEVOH), poly(acétate de vinyle), poly(éthers de vinyle), poly(chlorure de vinyle) (PVC) et poly(ester de vinyle), butadiènes tels que poly(styrène butadiène) et poly(butadiène acrylonitrile), silicones, polyesters, co-polyesters, polyamides, co-polyamides, polyesters réticulés, acryliques tels que styrène acryliques et acrylonitrile acryliques, époxys, phénoxys, phénoliques, polyuréthanes, phénol-formaldéhyde et urée-formaldéhyde, des copolymères correspondants, et des combinaisons correspondantes.

4. Stratifié composite selon l'une quelconque des revendications précédentes, le voile de non-tissé comprenant en outre des particules de renfort formées d'un matériau choisi parmi : polymères thermoplastiques, polymères élastomériques, combinaison de polymères thermoplastiques et élastomériques, et polymères thermoplastiques réticulés.

5. Stratifié composite selon l'une quelconque des revendications précédentes, les fibres de renforcement dans chaque pli de préimprégné étant sous la forme de fibres unidirectionnelles, et la résine de matrice durcissable du pli de préimprégné comprenant un ou plusieurs polyépoxydes, au moins un agent de durcissement, et moins de 25 % (en pourcentage en poids) de matériau thermoplastique ou de polymère thermoplastique sur la base du poids total de la résine de matrice durcissable.

6. Préforme fibreuse configurée pour une infusion de résine liquide, comprenant :

   une pluralité de couches fibreuses qui sont perméables à une résine liquide ; et

au moins un voile de non-tissé imbriqué ou interposé entre deux couches fibreuses adjacentes ;
le voile de non-tissé étant poreux, perméable à un liquide, et comprenant :

(a) des fibres de carbone entremêlées, agencées de manière aléatoire sous la forme d'une structure de non-tissé ;
(b) des particules d'agent ignifugeant dispersées dans toute la structure de non-tissé de sorte que la majorité des particules d'agent ignifugeant pénètrent à travers l'épaisseur de la structure de non-tissé, lesdites particules d'agent ignifugeant étant choisies parmi des particules de : polyphosphate d'ammonium, polyphosphate d'ammonium encapsulé à l'intérieur d'une résine de mélamine ou contenant de la mélamine, polyphosphazène, cyanurate de mélamine, phosphate de mélamine, polyphosphate de mélamine, poly(phosphates métalliques) de mélamine, oxydes métalliques y compris l'hydroxyde d'aluminium ($Al(OH)_3$), trihydrate d'alumine (ATH), borate de zinc, silicates de métaux alcalins ; et
(c) un liant polymérique ou résineux, préférablement, en une quantité de 5 % à 25 % en poids sur la base du poids total du voile,

le voile de non-tissé ayant un poids surfacique allant jusqu'à 30 g/m$^2$, préférablement jusqu'à 20 g/m$^2$, le rapport en poids de fibres dans le voile sur particules d'agent ignifugeant étant de 2 : 1 à 1 : 3, et des particules d'agent ignifugeant ayant une taille moyenne de particule (d50) de 5 à 35 microns telle que déterminée par diffraction laser, selon le procédé de la description.

7. Préforme fibreuse selon la revendication 6, les couches fibreuses étant choisies parmi : des couches de fibres unidirectionnelles, des tissus tissés et des tissus multiaxiaux.

8. Procédé de préparation d'une structure composite, comprenant :

l'infusion de la préforme fibreuse selon la revendication 6 ou 7 avec une résine liquide comprenant une ou plusieurs résines thermodurcissables et un agent de durcissement ; et
le durcissement de la préforme infusée par de la résine.

9. Voile d'agent ignifugeant comprenant (a) des fibres de carbone entremêlées, agencées de manière aléatoire, (b) des particules d'agent ignifugeant dispersées dans tout le voile, et (c) un liant polymérique ou résineux pour la liaison ensemble des fibres et des particules,

le voile ayant un poids surfacique allant jusqu'à 30 g/m$^2$, préférablement jusqu'à 20 g/m$^2$,
les particules d'agent ignifugeant ayant une taille moyenne de particule (d50) de 5 à 35 microns telle que déterminée par diffraction laser, selon le procédé de la description, et étant choisies parmi des particules de : polyphosphate d'ammonium, polyphosphate d'ammonium encapsulé à l'intérieur d'une résine contenant de la mélamine, polyphosphazène, cyanurate de mélamine, phosphate de mélamine, polyphosphate de mélamine, poly(phosphates métalliques) de mélamine, oxydes métalliques y compris l'hydroxyde d'aluminium ($Al(OH)_3$), trihydrate d'alumine (ATH), borate de zinc, silicates de métaux alcalins, et des combinaisons correspondantes, et le rapport en poids de fibres sur particules d'agent ignifugeant étant de 2 : 1 à 1 : 3.

10. Voile d'agent ignifugeant selon la revendication 9, le liant étant présent en une quantité de 5 % à 25 % en poids, ou 10 % à 20 % en poids, sur la base du poids total du voile.

11. Voile d'agent ignifugeant selon la revendication 9 ou 10, le liant étant choisi parmi : résines de poly(alcool vinylique) (PVA), poly(éthylène alcool vinylique) (PEVOH), poly(acétate de vinyle), poly(éther de vinyle), poly(chlorure de vinyle) (PVC) et poly(ester de vinyle), butadiènes tels que poly(styrène butadiène) et poly(butadiène acrylonitrile), silicones, polyesters, co-polyesters, polyamides, co-polyamides, polyesters réticulés, acryliques tels que styrène acryliques et acrylonitrile acryliques, époxys, phénoxys, phénoliques, polyuréthanes, phénol-formaldéhyde et urée-formaldéhyde, des copolymères correspondants, et des combinaisons correspondantes.

12. Voile d'agent ignifugeant selon l'une quelconque des revendications 9 à 11, comprenant en outre des particules de renfort dispersées dans tout le voile, lesdites particules de renfort étant formées d'un matériau choisi parmi : polymères thermoplastiques, polymères élastomériques, combinaison de polymères thermoplastiques et élastomériques, et polymères thermoplastiques réticulés.

13. Voile d'agent ignifugeant selon l'une quelconque des revendications 9 à 12, le voile étant une structure auto-portante, qui n'est pas fixée à une autre couche ou un autre support.

FIG.1

FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017083631 A1
- US 2015375461 A1
- US 2010136316 A1
- US 8846818 B
- US 20100304118 A
- US 4891176 A
- US 4942013 A
- US 4902215 A
- US 6257858 B
- US 8652371 B